(19) Europäisches Patentamt
European Patent Office
Office européen des brevets

(11) Publication number : **0 310 403 B1**

# (12) EUROPEAN PATENT SPECIFICATION

(45) Date of publication of patent specification : **14.06.95 Bulletin 95/24**

(51) Int. Cl.$^6$ : **G02F 1/137**

(21) Application number : **88309073.0**

(22) Date of filing : **29.09.88**

## (54) Liquid crystal electro-optical device.

(30) Priority : **29.09.87 JP 244808/87**
**07.10.87 JP 253178/87**
**07.10.87 JP 253179/87**
**07.10.87 JP 253180/87**

(43) Date of publication of application : **05.04.89 Bulletin 89/14**

(45) Publication of the grant of the patent : **14.06.95 Bulletin 95/24**

(84) Designated Contracting States : **CH DE FR GB LI NL SE**

(56) References cited :
**EP-A- 0 136 725**
**US-A- 4 613 209**
**PATENT ABSTRACTS OF JAPAN, vol. 11, no. 35 (P-542)[2482], 3rd February 1987 ; & JP-A-61 205 922**
**PATENT ABSTRACTS OF JAPAN, vol. 9, no. 210 (P-383)[1933], 28th August 1985 ; & JP-A-60 70 417**

(73) Proprietor : **SEMICONDUCTOR ENERGY LABORATORY CO., LTD.**
**398 Hase**
**Atsugi-shi Kanagawa-ken, 243 (JP)**

(72) Inventor : **Yamazaki, Shunpei**
**21-21, Kitakarasuyama 7-chome**
**Setagaya-ku Tokyo (JP)**
Inventor : **Sato, Masahiko**
**Flat Atsugi 103**
**Hase 931-1**
**Atsugi-shi Kanagawa-ken (JP)**

(74) Representative : **Milhench, Howard Leslie et al**
**R.G.C. Jenkins & Co.**
**26 Caxton Street**
**London SW1H 0RJ (GB)**

EP 0 310 403 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

The present invention relates to a liquid crystal device.

Heretofore, it has been known to utilize twisted nematic liquid crystals in the derivation of electro-optical displays. The liquid crystal materials are employed in layer form and are finely divided into a number of pixels by provision of a matrix electrode arrangement contiguous to the liquid crystal layer. However, due to the occurrence of crosstalk between adjacent pixels during operation in a time multiplexing mode, the number of pixels that can be achieved per unit display area, i.e. the pixel density, is substantially limited.

Switching is performed by means of thin film transistors provided for each pixel, this driving arrangement being called an active matrix system. However, because of the complexities of the manufacturing process, it is very difficult to produce a display having a large area and at the same time to obtain a cost reduction.

In an attempt to solve the above shortcomings of prior art devices, Clerk et al, proposed a ferroelectric liquid crystal device in their US Patent No. 4,367,924 and Fig.1 of the accompanying drawings is an explanatory schematic diagram showing the action of liquid crystal molecules in such prior art devices. A ferroelectric liquid crystal is interposed between a pair of glass substrates 11 and 11′ provided with an electrode arrangement made of $In_20_3$, $Sn0_2$ or ITO (Indium Tin Oxide) on the inner surfaces thereof. The liquid crystal is arranged between the substrates so that each molecular layer 12 is formed normal to the substrates as illustrated in the figure. The phase of the liquid crystal is chiral smectic C at which the device is driven, desirably at room temperature. The liquid crystal molecules can take up two stable positions I and II inclined at angles Õ and -Õ to the layer normal as shown in Fig.2.

The position of the molecules switches between the two stable positions in dependence upon an externally applied electric field normal to the substrates, and in this manner visual images can be constructed based on differential birefringence among pixels. One feature of this type of display device is its bistability by virtue of which the position of each liquid crystal molecule will be maintained after an applied signal is removed and until another signal is applied anew in the opposite sense. Namely, they can function as non-volatile memory elements.

In such a ferroelectric liquid crystal device, it is required that a uniform liquid crystal state without imperfections be obtained throughout the liquid crystal layer between the pair of substrates in order that uniform drive capability be obtained throughout the entire display area. A liquid crystal layer of this characteristic is referred to as "mono-domain" hereinafter.

Imperfections and defects are caused by small flaws in the orientation control films and by unevenness of the electrode arrangement formed on the substrates, or of the spacers and other causes. In order to avoid the occurrence of such imperfections and defects, mono-domain liquid crystal layers have been developed by a temperature gradient method in which the crystalline structure of the liquid crystal is unidimensionally developed inwardly from one end of the display area.

However, epitaxial growth of the smectic phase from a spacer edge by application of an appropriate temperature gradient in use of the temperature gradient method is effective only when the required display area exceeds several square centimeters. Furthermore, even if a large area mono-domain liquid crystal layer is constructed, the crystalline direction may not be exactly aligned parallel to the substrates, making a pre-tilted angle with the substrate plane. For this reason, liquid crystal molecular layers tend to bend causing zig-zag structures. The switching due to external electric fields may then take place in reverse senses at opposite sides of a folding plane in the zig-zag structure. It has often been observed that uniform display and driving performance are hindered by the zig-zag structure.

The inventors of the present invention have repeated experiments using liquid crystal displays comprising a chiral smectic C liquid crystal (ferroelectric liquid crystal) and have failed to drive the displays satisfactorily and to obtain clear images. This is supposed to be because of interactions between pixels. The main cause of such interactions might be quasi-monocrystalline (homogeneously ordered without discontinuity) regions bridging adjacent pixels. In other words, the switching of one pixel might influence an adjacent pixel through a bridging monocrystalline region.

A proposal for overcoming the abovementioned problems is disclosed in our European Patent Application No. 88308635.7 (EP-A-0308268). In accordance with this proposal there is provided a liquid crystal electro-optical device comprising chiral smectic liquid crystal material, the device being characterized in that the liquid crystal molecules form micro-domains each having a quasi-monocrystalline structure, pixels of the device each comprising a plurality of micro-domains each individually subject to a change of state when the respective pixel changes state. The invention of EP-A-0308268 provides for micro-domains to be formed in each pixel consisting of a chiral smectic liquid crystal layer. The micro-domains are regions of several microns width and

several hundreds of microns length in which molecules are oriented in monocrystalline form, and interfaces between the micro-domains constitute discontinuities which inhibit the orderliness of one micro-domain from influencing others. Each pixel comprises a plurality of micro-domains, and the condition of the liquid crystal molecules can be switched individually in each micro-domain by application of an electric field. Any interaction or crosstalk between micro-domains which are subjected to an applied electric field and neighbouring micro-domains which are free of the field is suppressed by virtue of the interfaces therebetween.

The improved liquid crystal device of the invention of EP-A-0308268 may be produced by interposing a specially formulated composite of plural liquid crystal materials having different characteristics between a pair of substrates each provided with an inner orientation control surface at a relatively high temperature at which the liquid crystal material is in an isotropic phase, and gradually cooling the liquid crystal material so that an ordered arrangement is developed with micro-domains as aforesaid each having a quasi-monocrystalline structure.

Unlike conventional structures in which liquid crystal molecules are aligned in a particular direction, liquid crystal molecules in accordance with the invention of EP-A-0308268 are aligned in diverse directions whereby a number of micro-domains are formed. Preferably, in a display having a row and column matrix electrode arrangement, the average dimension of said micro-domains with reference to the row direction is one or more orders of magnitude smaller than that of a pixel, and with reference to the column direction is of the order of that of a pixel.

## SUMMARY OF THE INVENTION

In accordance with the present invention, the invention of EP-A-0308268 can be put into effect by use of liquid crystal materials defined by the general formula:

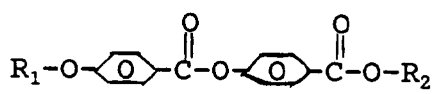

where $R_1$ is a hydrocarbon and $R_2$ is a hydrocarbon comprising at least two asymmetric carbon atoms. By use of a liquid crystal material of this type or by use of a blended liquid crystal material including this type of liquid crystal material, the formation of micro-domains as aforesaid is facilitated.

In an example of the above material, $R_1$ is $-C_8H_{17}$ and $R_2$ is a hydrocarbon comprising

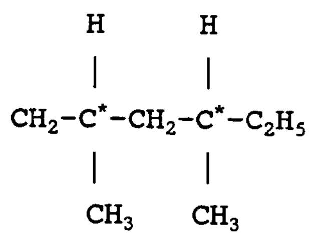

Further features of the invention are set forth with particularity in the appended claims and, together with the features abovementioned, will become clear to those possessed of the relevant skills from consideration of the following description given with reference to the accompanying drawings. Much of the following description is a repetition of the description of EP-A-0308268 aforementioned.

## BRIEF DESCRIPTION OF THE DRAWINGS

Fig.1 is an explanatory view showing the condition of liquid crystal molecules interposed between substrates in a prior art arrangement;

Fig.2 is a schematic diagram showing two stable positions of a liquid crystal molecule;

Fig.3 is a cross-sectional view of a liquid crystal device according to the invention of EP-A-0308268 comprising a chiral smectic liquid crystal material;

Fig.4 is a schematic view showing a micro-domain structure in a liquid crystal layer;

Figs.5(A) and 5(B) are microscopic photographs of micro-domains taken at two sites in a liquid crystal structure of 20 microns thickness in smectic A phase in accordance with the invention of EP-A-0308268, the photographs being taken with a magnification of 200 by use of polarizing plates arranged normal to

each other and sandwiching the liquid crystal structure;

Figs.6(A) and 6(B) are microscopic photographs of micro-domains taken at two sites in a liquid crystal structure of 20 microns thickness in smectic C phase in accordance with the invention of EP-A-0308268, the photographs being taken with a magnification of 200 by use of polarizing plates arranged normal to each other and sandwiching the liquid crystal structure; and

Figs.7(A) and 7(B) are microscopic photographs of micro-domains taken at two sites in a liquid crystal structure of 3 microns thickness in smectic C phase in accordance with the invention of EP-A-0308268, the photographs being taken with a magnification of 200 by use of polarizing plates arranged normal to each other and sandwiching the liquid crystal structure.

## DETAILED DESCRIPTION OF THE EMBODIMENTS

Referring now to Fig.3, a liquid crystal display device in accordance with the invention of EP-A-0308268 is illustrated in cross-sectional view. The device comprises a pair of glass substrates 1 and 1′, a first plurality of parallel electrode strips 3 formed on the substrate 1 and extending in the lateral direction, a second plurality of parallel electrode strips 3′ formed on the substrate 1′ and extending in the direction normal to the plane of the drawing sheet, a first orientation control film 4 made of a polyimide resin, a second orientation control film 4′ made of $SiO_2$, and an ester ferroelectric liquid crystal layer 5. The ferroelectric liquid crystal material in the exemplary embodiment is a composite chiral smectic C phase liquid crystal. The combination of the first and second electrode strips 3 and 3′ constitutes an electrode arrangement of matrix form defining a plurality of pixels. By appropriate selection of a suitable resin to form the orientation control films, it is possible to increase the relative threshold levels of the switching signals applied to the liquid crystal layer. The first and second orientation control films 4 and 4′ are given a rubbing treatment. Assuming that the scanning of the pixels is to be carried out in the direction parallel to the first electrode strips 3, the rubbing has to be performed in a direction normal to the plane of the drawing sheet. In other words, rubbing is performed along the columns in the case of display designs adapted for scanning along the rows. The periphery of the substrates is provided with a sealing member 6 for avoiding loss of liquid crystal. Reference numerals 2 and 7 designate polarizing plates arranged in the appropriate orientations.

The dimensions of the parts of the device shown in the figure are only chosen for illustration and are not in accordance with a real design. Although not shown in the figure, when assembled, spacers are interposed between the substrates in order to maintain them spaced apart at a constant distance. In reality, the distance between the substrates may be 3 microns and the width of each electrode strip may be 0.36 mm and may be separated from adjacent strips by 0.04 mm intervals.

In accordance with the invention of EP-A-0308268, the liquid crystal material is prepared in order to have a broad transition temperature range within which the phase of the liquid crystal gradually changes from an isotropic phase to a quasi-crystalline phase. In order to obtain such a transition characteristic, the liquid crystal material of the embodiment described in EP-A-0308268 is prepared by blending several kinds of liquid crystals. The liquid crystal constituents are selected from those having diverse transition temperatures distributed over a wide temperature range. A composite liquid crystal material having a wide transition temperature range was obtained by blending eight kinds of liquid crystal esters.

In the following, eight exemplary liquid crystal constituents are identified, each with respective proportions in parenthesis, these eight constituents together comprising an exemplary composite liquid crystal material in accordance with the invention of EP-A-0308268. The eight constituents are as follows:

NO.1: 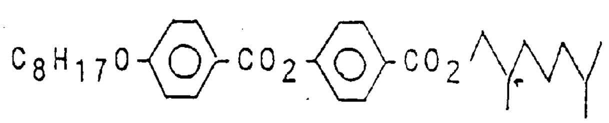
(20.3%)

$$Cryst <-(31.8^\circ C)-> Sm_C^* <-(32.6^\circ C)-> Sm_A <-(53.0^\circ C)-> Iso$$

NO.2: 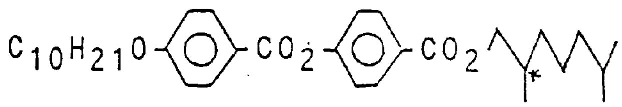
(15.3%)

Cryst<-(42.6°C)->Sm$_{C}^{*}$<-(43.8°C)->Sm$_{A}$<-(54.2°C)->Iso

NO.3: 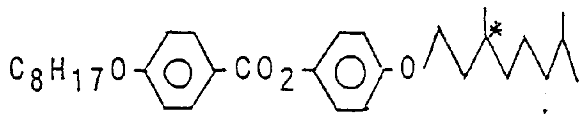
(30.7%)

Cryst<-(47.3°C)->Sm$_{C}^{*}$<-(47.8°C)->Sm$_{A}$<-(58.7°C)->Iso

NO.4: 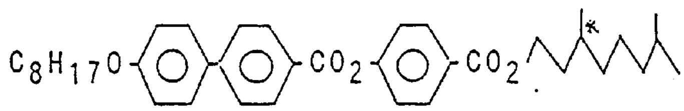
(4.1%)

Cryst<-(75.9°C)->Sm$_{C}^{*}$<-(136.3°C)->Sm$_{A}$<-(162.2°C)->Iso

NO.5: 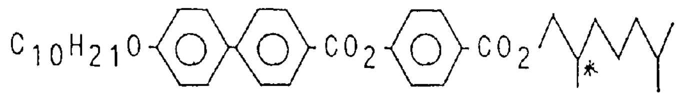
(17.6%)

Cryst<-(61.5°C)->Sm$_{C}^{*}$<-(140.7°C)->Sm$_{A}$<-(164.3°C)->Iso

NO.6: 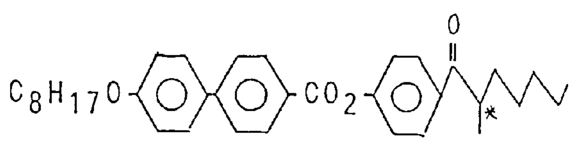
(0.5%)

Cryst<-(83.3°C)->Sm$_{C}^{*}$<-(139.7°C)->Sm$_{A}$<-(152.4°C)->Iso

NO.7: 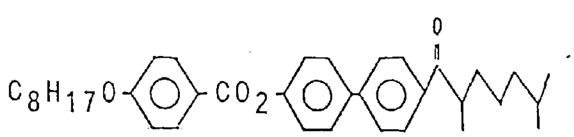
(1.8%)

Cryst<-(102.0°C)->Sm$_{C}^{*}$<-(112.0°C)->Sm$_{A}$<-(137.0°C)->Iso

NO.8: 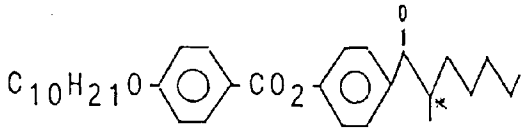
(9.7%)

Cryst<-(27.0°C)->$Sm_C$*<-(29.3°C)->$Sm_A$<-(55.0°C)->Iso

By blending the above constituents, a liquid crystal material was obtained with its transition characteristics such that Crystal<-(4.7°C-3.5°C)->$S_C$*<-(62.5°C-51.9°C)->$Sm_A$<-(89.7°C-75.4°C)->Iso.

It will not be difficult for those skilled in the art to prepare liquid crystal materials which have transition characteristics suitable for particular applications. By experiment we prepared another liquid crystal material whose phase transition was such that isotropic liquid <-(130°C-98°C)-> smectic A <-(73°C-60°C)-> smectic *C <-(10°C-0°C)-> smectic *I <-(-10°C)-> crystal.

After interposing such a composite liquid crystal material between the orientation control films provided on the substrates 1 and 1′ at a temperature at which the liquid crystal material is in its isotropic phase, the structure is gradually cooled to a temperature at which the entirety of the composite liquid crystal material is in its smectic phase. By virtue of this process, liquid crystal molecules form micro-domains which grow as the temperature falls. Each micro-domain can be regarded as having a quasi-monocrystalline structure. The proportion of each constituent may be from 5-20%, for example, though it is generally desirable to limit the maximum proportion of any one constituent to 20% and to use many different kinds of liquid crystal materials at nearly equal proportions. The formation of micro-domains in the liquid crystal layer starts along the oriented surface given rubbing treatment so that the quasi-polycrystalline area consisting of micro-domains gradually grows as the temperature falls. Fig.4 shows a sketch topologically drafted in accordance with a microscopic photograph of the micro-domains. The width and the length of each micro-domain 8 are about several microns and several hundreds of microns respectively. The significant feature of the structure comprising the micro-domains is the absence of zig-zag defects. While the interfaces 9 between the micro-domains 8 are defects, the entirety of the liquid crystal can be regarded approximately as a uniform quasi-crystalline structure except for the interfaces between the domains which are small defects.

When a sawtooth pulse having a maximum voltage of ±10V is applied between the electrode strips 3 and 3′, the molecular state of only that pixel which is sandwiched by the two activated electrodes is changed. The change in state takes place uniformly in every micro-domain 8 within the pixel so that the entirety of the pixel is changed at once. In accordance with experimental results, no different was observed in the changing process between a central position and a peripheral position of the pixel.

Figs.5(A) and 5(B) are microscopic photographs showing micro-domains taken at two sites of a liquid crystal layer in smectic A in accordance with the invention of EP-A-0308268, the photographs being taken with a magnification of 200 and by use of polarizing plates arranged normal to each other and supporting the liquid crystal therebetween. The distance between the pair of substrates was selected to be 20 microns rather than 3 microns for the purpose of taking photographs in which micro-domain textures appear clearly. As shown in the photographs, the liquid crystal is divided into a number of micro-domains. this means that liquid crystal molecules have been oriented uniformly in each micro-domain but adjacent micro-domains have been oriented in different orientation directions. The micro-domains are each several microns in width and several hundreds of microns in length. The micro-domains are formed approximately parallel to the rubbing direction given to the orientation control films.

As the phase of liquid crystal is transformed to smectic C with descending temperature, stripes appear in each micro-domain as may be seen from Figs.6(A) and 6(B) which are photographs taken under the same conditions as those of Figs.5(A) and 5(B) except for the temperature. The width of each stripe corresponds to one turn of a helix of the chiral smectic C liquid crystal and is about 3 microns. As shown in the photographs, stripes of neighbouring micro-domains are aligned at their interfaces. Figs.7(A) and 7(B) are corresponding photographs for the case where the distance between the substrates is about 3 microns, other conditions otherwise being the same as for Figs.5(A) and 5(B) The length of each micro-domain becomes short as compared with Figs.6(A) and 6(B). Such a narrow distance between the substrates allows the liquid crystal helices to be relatively unwound, and therefore the response speed becomes as fast as 10 microseconds when measured under the same conditions as in the case of a 20 microns substrate spacing.

The size of the micro-domains can be changed by adjusting the preparation conditions. For instance, the dimensions of the micro-domains were measured in several cases where rubbing treatment was performed

on the orientation control film with a rolling device under the following relative conditions:

| | Case 1 | Case 2 | Case 3 |
|---|---|---|---|
| Number of rotations rotations | 1.5 | 1.5 | 1.0 |
| Weight applied to the roll | 1.5 | 1.0 | 1.0 |

wherein the figures for Case 1 and Case 2 are relative values calculated with reference to those of Case 3 being 1.0. The dimensions of the micro-domains were 25 microns x 450 microns for Case 1; 10 microns x 200 microns for Case 2; and 8 microns x 200 microns for Case 3. The micro-domains were observed uniformly throughout the liquid crystal layer.

Instead of the use of a composite liquid crystal material having a wide transition temperature range, as described in EP-A-0308268, particular liquid crystal materials have been found to expedite the formation of micro-domains. According to the present invention, such liquid crystal materials are defined by the general formula:

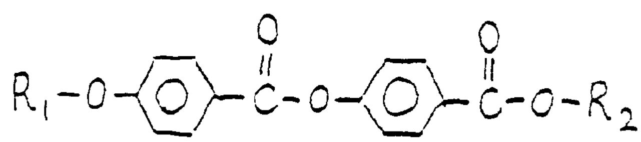

where $R_1$ is a hydrocarbon, and $R_2$ is a hydrocarbon comprising at least two asymmetric carbon atoms. By use of a liquid crystal material of this type or by use of a blended liquid crystal material including this type of liquid crystal material, micro-domains are fabricated. In an example of the above material $R_1$ is $-C_8H_{17}$ and $R_2$ is a hydrocarbon comprising

```
     H        H
     |        |
CH2-C*-CH2-C*-C2H5
     |        |
    CH3      CH3
```

## Claims

1. A liquid crystal electro-optical device comprising chiral smectic liquid crystal material, the device being characterized in that the liquid crystal molecules form micro-domains each having a quasi-monocrystalline structure, pixels of the device each comprising a plurality of micro-domains each individually subject to a change of state when the respective pixel changes state, and the liquid crystal material conforming to the formula:

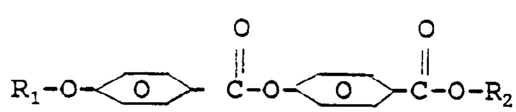

where $R_1$ is a hydrocarbon, and $R_2$ is a hydrocarbon comprising at least two asymmetric carbon atoms.

2. A device according to claim 1 wherein $R_1$ is $-C_8H_{17}$ and $R_2$ comprises

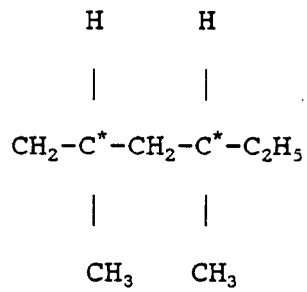

3. A device according to claim 1 or 2, said device comprising:

first and second substrates arranged substantially parallel and opposite to each other;

said chiral smectic liquid crystal material forming a layer interposed between said substrates;

electrode arrangements formed on said substrates for enabling the application of an electric field selectively to pixels of said liquid crystal layer; and

an orientation control layer formed on an inside surface of at least one of said substrates and contacting said liquid crystal layer;

the liquid crystal molecules in each individual micro-domain being oriented uniformly but in a direction which is different from the alignment directions of micro-domains adjacent thereto.

## Patentansprüche

1. Elektrooptische Flüssigkristallvorrichtung, umfassend ein chirales smektisches Flüssigkristallmaterial, wobei die Vorrichtung dadurch gekennzeichnet ist, daß die Flüssigkristallmoleküle Mikrodomänen bilden, die jeweils eine quasimonokristalline Struktur aufweisen, wobei Pixel der Vorrichtung jeweils eine Mehrzahl von Mikrodomänen umfassen, die jeweils individuell einer Zustandsänderung unterliegen, wenn das jeweilige Pixel seinen Zustand ändert, wobei das Flüssigkristallmaterial folgender Formel entspricht:

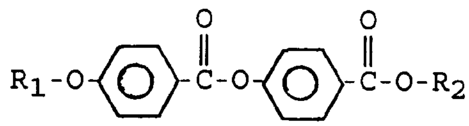

worin $R_1$ einen Kohlenwasserstoff bedeutet und $R_2$ einen Kohlenwasserstoff mit mindestens 2 asymmetrischen Kohlenstoffatomen bedeutet.

2. Vorrichtung nach Anspruch 1, worin $R_1$ die Bedeutung $-C_8H_{17}$ hat und $R_2$ die Bedeutung

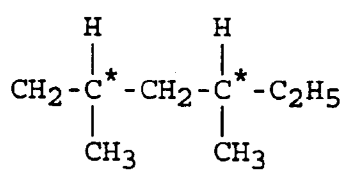

hat.

3. Vorrichtung nach Anspruch 1 oder 2, wobei die Vorrichtung folgendes umfaßt:

ein erstes und ein zweites Substrat, die im wesentlichen parallel einander gegenüber angeordnet sind;

wobei das chirale smektisches Flüssigkristallmaterial eine zwischen den Substraten angeordnete

Schicht bildet;

Elektrodenanordnungen, die auf den Substraten ausgebildet sind, um das Anlegen eines elektrischen Felds selektiv auf Pixel der Flüssigkristallschicht zu ermöglichen;

eine Orientierungskontrollschicht, die auf einer inneren Oberfläche von mindestens einem der Substrate ausgebildet ist und mit der Flüssigkristallschicht in Kontakt steht;

wobei die Flüssigkristallmoleküle in den individuellen Mikrodomänen jeweils einheitlich, aber in eine Richtung, die sich von den Ausrichtungsrichtungen der dazu benachbarten Mikrodomänen unterscheidet, orientiert sind.

## Revendications

1. Dispositif électro-optique à cristaux liquides comprenant un matériau cristal liquide smectique chiral, le dispositif étant caractérisé en ce que les molécules de cristal liquide forment des microdomaines ayant chacun une structure quasi-monocristalline, chacun des pixels du dispositif comprenant une série de microdomaines dont chacun est individuellement soumis à un changement d'état quand le pixel correspondant change d'état, et le matériau cristal liquide a la formule suivante :

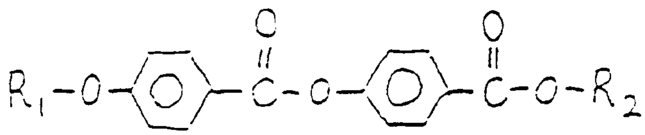

dans laquelle R1 est un radical hydrocarboné et R2 est un radical hydrocarboné comprenant au moins 2 atomes de carbone asymétriques.

2. Dispositif selon la revendication 1, dans lequel R1 est un radical $-C_8H_{17}$, et $R_2$ comprend :

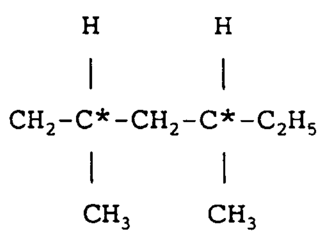

3. Dispositif selon la revendication 1 ou 2, ce dispositif comprenant :

un premier et un deuxième substrats disposés d'une manière sensiblement parallèlement entre eux et sensiblement l'un en face de l'autre ;

ledit matériau cristal liquide smectique chiral formant une couche placée entre les substrats ;

des ensembles d'électrodes formés sur lesdits substrats pour permettre l'application sélective d'un champ électrique à des pixels de ladite couche de cristaux liquides ; et

une couche de commande d'orientation, formée sur une surface intérieure d'au moins l'un desdits substrats, et en contact avec ladite couche de cristaux liquides ;

les molécules de cristal liquide de chaque microdomaine individuel étant uniformément orientées, mais dans une direction différente des directions d'alignement des microdomaines qui leur sont adjacents.

FIG. 1

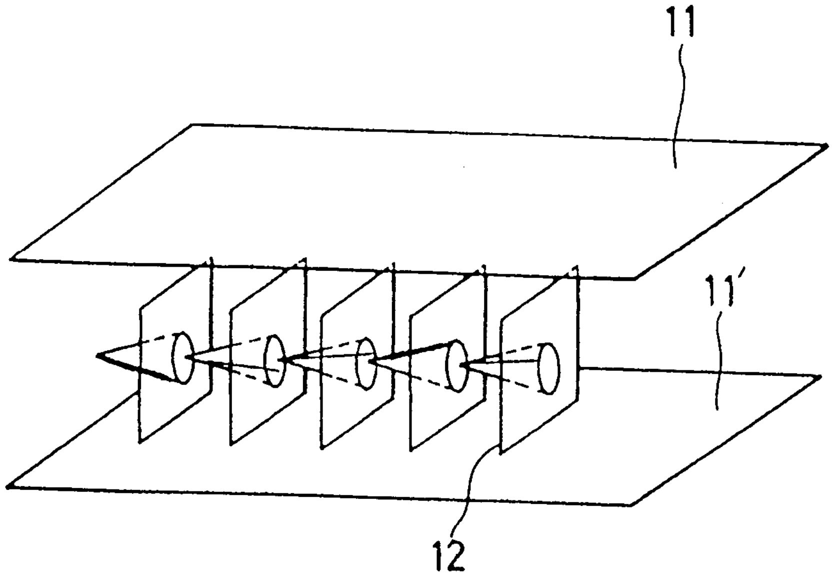


FIG. 2

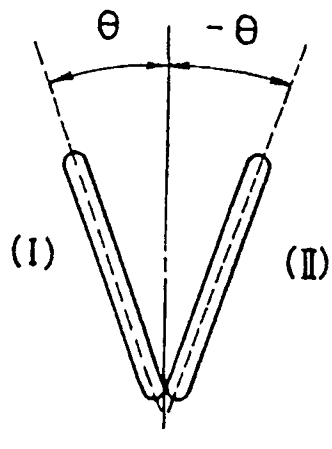

FIG. 3

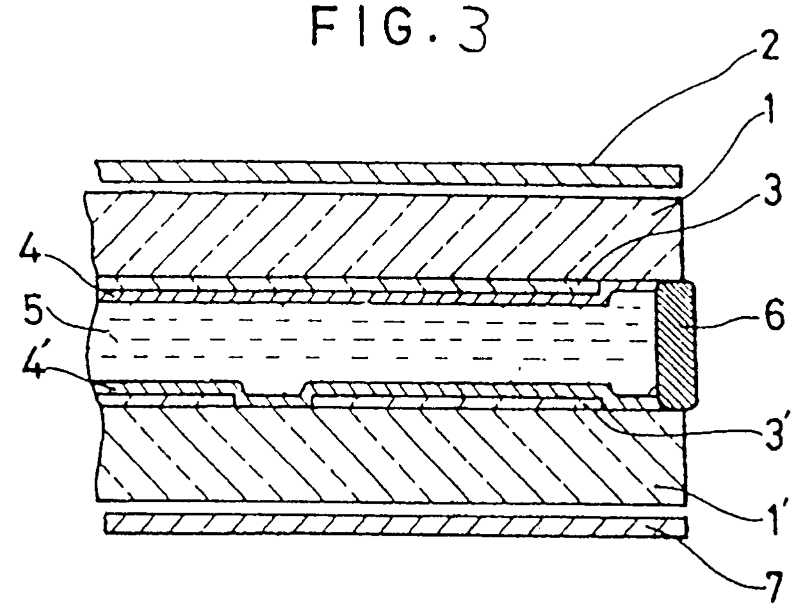


FIG. 4

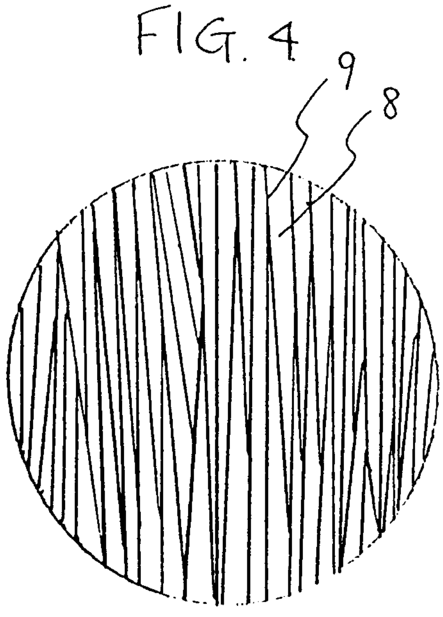

Fig 5(A)

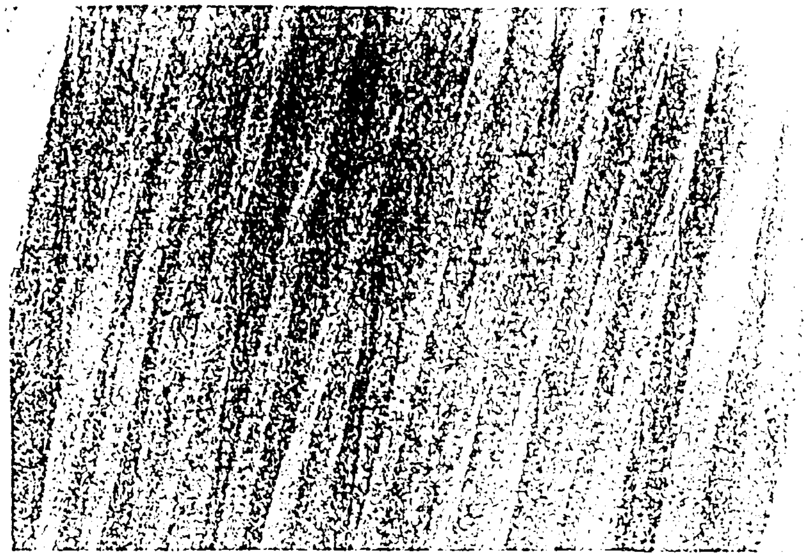

Fig 6(A)

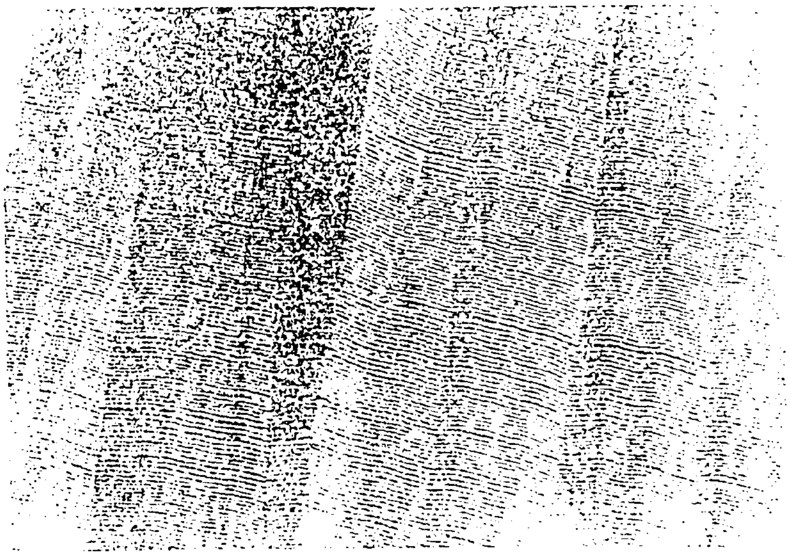

Fig 7(A)

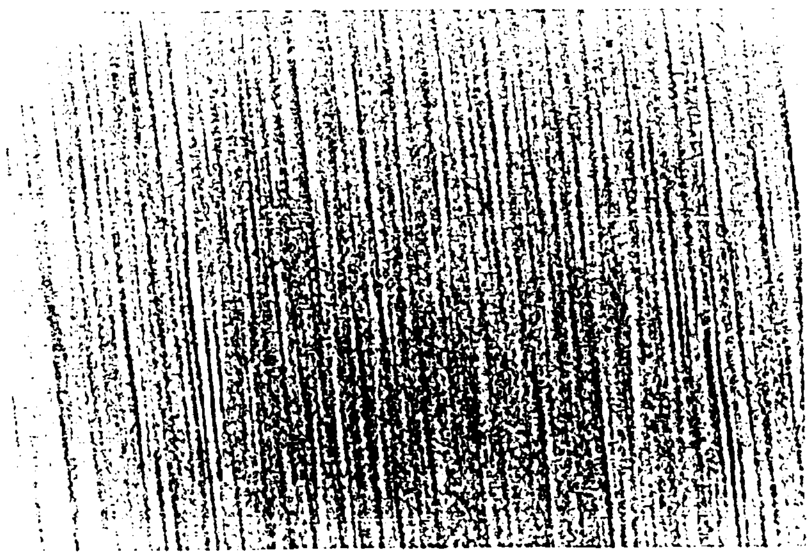

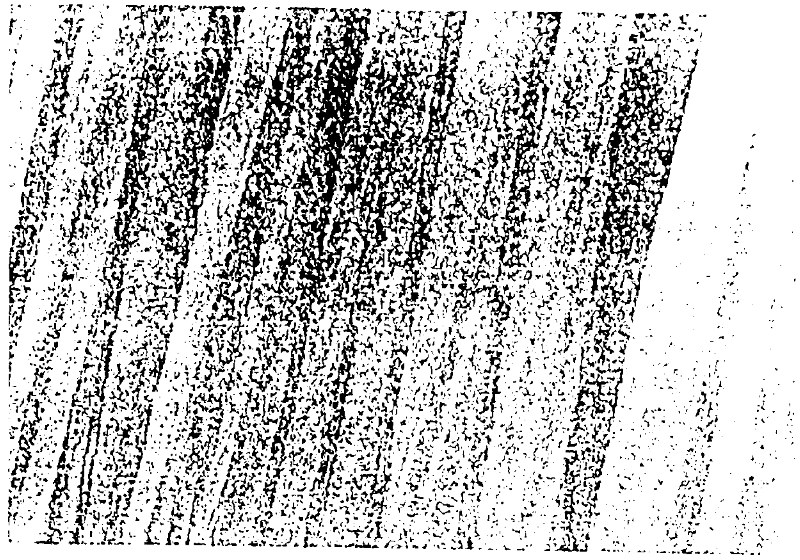

Fig 5(B)

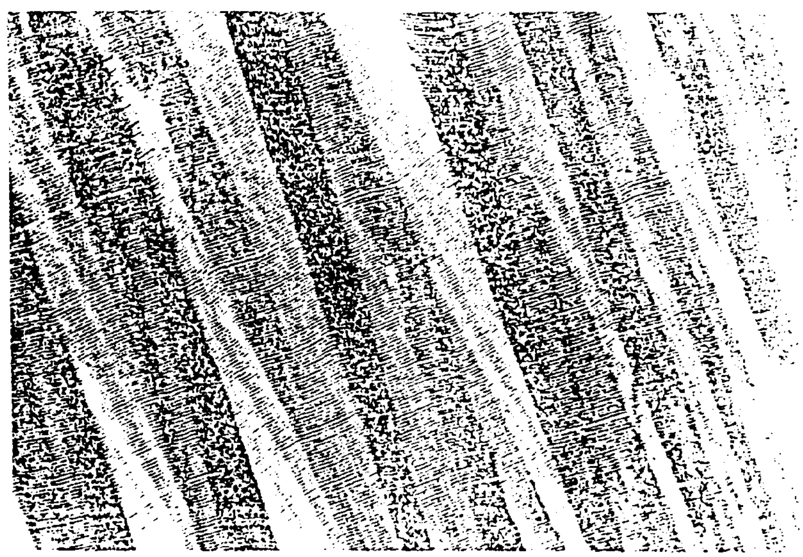

Fig 6(B)

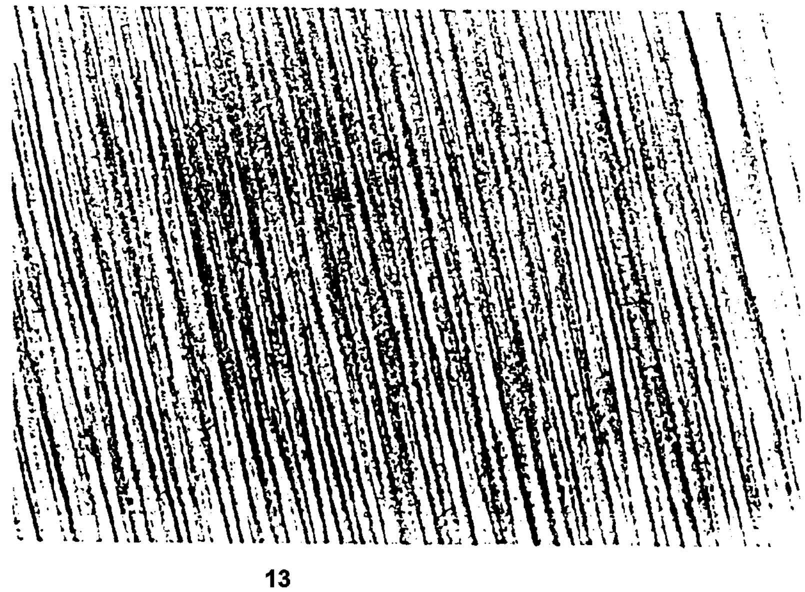

Fig 7(B)